(19) Europäisches Patentamt
European Patent Office
Office européen des brevets

(11) Publication number : **0 645 422 A1**

(12) # EUROPEAN PATENT APPLICATION

(21) Application number : **94305789.3**

(22) Date of filing : **04.08.94**

(51) Int. Cl.$^6$ : **C08K 5/523,** C08L 83/10, C08L 69/00

(30) Priority : **19.08.93 US 108259**

(43) Date of publication of application :
**29.03.95 Bulletin 95/13**

(84) Designated Contracting States :
**BE DE ES FR GB IT NL**

(71) Applicant : **GENERAL ELECTRIC COMPANY**
**1 River Road**
**Schenectady, NY 12345 (US)**

(72) Inventor : **Davis, Gary Charles**
**5 Felicia Court**
**Albany, New York 12205 (US)**
Inventor : **Groothuis, Adelbert Hermannus L.**
**Lindebaan 85**
**NL-4611 LW Bergen op Zoom (NL)**

(74) Representative : **Pratt, Richard Wilson et al**
**London Patent Operation**
**G.E. Technical Services Co. Inc.**
**Essex House**
**12/13 Essex Street**
**London WC2R 3AA (GB)**

(54) **Flame retardant polycarbonate blends.**

(57) Polycarbonate blends which contain phosphorus compounds and siloxane copolymers are disclosed herein. Said polycarbonate blends unexpectedly retain high glass transition temperatures, high impact resistances as well as flame retardant properties.

EP 0 645 422 A1

## Field of the Invention

This invention relates to new compositions of matter. More particularly, novel polycarbonate blends which contain phosphorus compounds and siloxane copolymers are disclosed. Said polycarbonate blends unexpectedly retain high glass transition temperatures, high impact resistances as well as flame retardant properties.

## Background of the Invention

Polycarbonates are a well known class of high impact resistant thermoplastic resins characterized by optical clarity, high ductility as well as other advantageous properties. They are frequently employed as lenses and windows as a result of their transparency. Bisphenol A polycarbonate (BPA) is the predominant commercially available resin of this type. It is derived from 2,2-bis(4-hydroxyphenyl)propane, and ordinarily has a glass transition temperature of about 150°C.

It is of increasing interest to prepare polycarbonates which, while retaining the ductility of bisphenol A polycarbonates, have higher glass transition temperatures and are therefore more resistant to softening when heated. Moreover, there is demand for polycarbonates which possess flame retardant properties and high impact strengths since they are, for instance, conventionally used in the automotive, electrical and computer industries. Several flame retardant agents have been utilized in an attempt to produce flame retardant polycarbonates. For example, alkali metal salts of strong sulfonic acids are commonly used. However, when incorporated into the polycarbonate, the resulting polymer is hydrolytically sensitive. Further, when using these salts, it is necessary to employ drip inhibitors or gas phase flame retardant agents. This is not ideal since drip inhibitors may destroy the clarity of the polymer and gas phase retardants are often halogenated which creates problems with corrosion and toxicity. As an alternative to the above, phosphorus containing compounds have been used. When blended with a base polycarbonate, some flame retardant properties are observed. However, the resulting polymer blends are not desirable since they possess low glass transition temperatures (Tg) and low impact resistances when compared to base resins deplete of the phosphorus containing compounds.

The instant invention, therefore, is based on the discovery of novel polycarbonate blends. Said polycarbonate blends contain phosphorus compounds and siloxane copolymers and they unexpectedly retain high glass transition temperatures, high impact resistances as well as flame retardant properties.

Moreover, the polycarbonate blends described herein possess siloxane copolymers with covalent silicon-carbon bonds. However, siloxane copolymers with covalent silicon-oxygen-carbon bonds may also be employed. Siloxane copolymers with covalent silicon-carbon bonds are often preferred since they are hydrolytically stable.

High glass transition temperatures may be defined as at least about 125°C and high impact resistances are defined as at least about 10 ft lb/in of notch. Flame retardant properties as used throughout means polycarbonate blends which satisfy UL-94 V-O requirements for flammability as shown by Flammability of Plastic Materials Bulletin of January 24, 1980. The rates of heat release and smoke release as mentioned below were determined according to standard Ohio State University protocol (ASTM E906-83). It is also noted that the flame retardant polycarbonate blends described herein are free of alkali metal and alkaline earth metal salts of sulfonic acids as well as gas phase flame retardants such as bromine compounds. Furthermore, the term polycarbonate blends used throughout means polycarbonate copolysiloxane compositions comprising phosphorus compounds, and the term siloxane copolymers includes silicone-poly(arylcarbonate) block copolymers such as polydiorganosiloxane block copolymers.

It is further within the scope of the instant invention to employ polycarbonate impact modifiers, thermal stabilizers, ultraviolet screeners, fillers, glass fibers as well as additional conventional additives.

## Description of the Prior Art

Accordingly, flame retardant polymers have been disclosed in the art. In CA Selects: Flammability 119 (14): $9805_z$ (1993), a fire resistant polyester carbonate composition which comprises siloxane is disclosed. Said polyester carbonate may further comprise halogen atoms as well as phosphoric acid esters in order to obtain desired properties. Moreover, in producing the above-mentioned polyester carbonate it is necessary to employ drip inhibitors, such as polytetrafluoroethylene (PTFE), which characteristically decrease the clarity of the polymer.

Still other investigators have focused their attention on flame retardant polymers which comprise phosphorus and polysiloxane. In German Abstract DE3629546, a phosphorus and polysiloxane containing flame resistant material is disclosed which comprises of, among other things, a substituted styrene, a (meth)acrylonitrile or a maleic anhydride. Furthermore, when producing the material, drip inhibitors such as

PTFE are required which again decrease the clarity of the polymers.

**Summary of the Invention**

The instant invention is based on the discovery of novel polycarbonate blends. Said polycarbonate blends comprise as an additive about 0.5 to about 9.5 weight percent of phosphorus containing compounds but preferably about 2.0 to about 5.0 weight percent of said phosphorus containing compounds based on total weight of the polycarbonate blend, wherein the total amount of phosphorus in the polycarbonate blend is no greater than about 0.5 weight percent based on total weight of the polycarbonate blend. Moreover, the polycarbonate blends described herein comprise about 5 to about 99.5 weight percent of siloxane copolymers based on total weight of the polycarbonate blend, wherein said siloxane copolymers comprise of at least about 0.5 weight percent silicon based on total weight of the polycarbonate blend but preferably at least about 2 weight percent silicon based on total weight of said polycarbonate blend. It is noted that it is not always necessary to employ additional polycarbonates when preparing the instant polycarbonate blends since the total amount of polycarbonate in the polycarbonate blends may originate from the siloxane copolymers.

An additional feature of the novel polycarbonate blends described herein is that they unexpectedly retain high glass transition temperatures, high impact resistances as well as flame retardant properties without requiring the use of an added drip inhibitor. However, drip inhibitors such as polytetrafluoroethylene can be employed.

Further features and advantages of the invention will be made evident upon reference to the following detailed description.

**Detailed Description of the Preferred Embodiments**

The polycarbonate blends of the instant invention may comprise structural units of the formulae

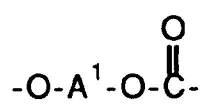

I

and

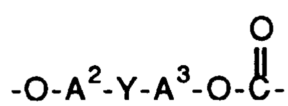

, II

wherein II is a preferred subgenus of I.

$A^1$ is a divalent substituted or unsubstituted aliphatic, alicyclic or aromatic radical and $A^2$ and $A^3$ are each independently a monocyclic divalent aromatic radical. Y is a bridging radical in which 1 to 4 atoms separate $A^2$ from $A^3$.

The $A^2$ and $A^3$ values may be unsubstituted phenylene or substituted derivatives thereof, illustrative substituents (one or more) being alkyl, alkenyl, alkoxy and the like. Unsubstituted phenylene radicals are preferred. Both $A^2$ and $A^3$ are preferably p-phenylene, although both may be o- or m-phenylene or one o- or m-phenylene and the other p-phenylene.

The bridging radical, Y, is one in which one or two atoms, preferably one, separate $A^2$ from $A^3$. It is most often a hydrocarbon radical and particularly a saturated radical such as methylene, cyclohexylmethylene, 2-[2.2.1]bicycloheptylmethylene, ethylene, isopropylidene, neopentylidene, cyclohexylidene, cyclopentadecylidene, cyclododecylidene or adamantylidene, especially a gemalkylene (alkylidene) radical. Also included, however, are unsaturated radicals and radicals which contain atoms other than carbon and hydrogen; for example, 2,2-dichloroethylidene, carbonyl, phthalidylidene, oxy, thio, sulfoxy and sulfone. For reasons of availability and particular suitability for the purposes of this invention, the preferred units of formula II are 2,2-bis(4-phenylene)propane carbonate units, which are derived from bisphenol A and in which Y is isopropylidene and $A^2$ and $A^3$ are each p-phenylene.

Further, it is within the scope of the invention to include the formula

$$HO\text{-}A^1\text{-}OH \quad , \qquad III$$

which is the source of structural units of formula I above;
$A^1$ is as previously defined.

Illustrative non-limiting examples of III include:
2,2-bis(4-hydroxyphenyl)-propane (bisphenol A);
2,2-bis(3,5-dibromo-4-hydroxyphenyl)propane;
2,2-bis(3,5-dimethyl-4-hydroxyphenyl)propane;
1,1-bis(4-hydroxyphenyl)cyclohexane;
1,1-bis(3,5-dimethyl-4-hydroxyphenyl)cyclohexane;
1,1-bis(4-hydroxyphenyl)decane;
1,4-bis(4-hydroxyphenyl)propane;
1,1-bis(4-hydroxyphenyl)cyclododecane;
1,1-bis(3,5-dimethyl-4-hydroxyphenyl)cyclododecane;
4,4-dihydroxydiphenyl ether;
4,4-thiodiphenol;
4,4-dihydroxy-3,3-dichlorodiphenyl ether;
4,4-dihydroxy-3,3-dihydroxydiphenyl ether;
1,3 benzenediol; and
1,4-benzenediol.

Other useful dihydroxyaromatic compounds which are also suitable for use in the preparation of the above copolycarbonates are disclosed in U.S. Patents 2,999,835; 3,028,365; 3,334,154 and 4,131,575, all of which are incorporated herein by reference. The preferred bisphenol is 2,2-bis(4-hydroxyphenyl)propane (bisphenol A).

In addition to the above, the copolycarbonates of the instant invention may also contain units corresponding to the dihydroxy compounds disclosed by name or formula (generic or specific) in U.S. Patent 4,217,438, the disclosure of which is incorporated herein by reference. Such copolycarbonates typically comprise about 25-75% by number of substantially pure bisphenol units (cis- or transisomers or both) with the balance being alternative units such as those depicted by formulae I and II.

The polycarbonates of the instant invention may be prepared by reacting bisphenols with a carbonate source such as phosgene or dimethyl carbonate using conventional techniques. These include melt polymerization, interfacial polymerization and interfacial conversion with bischloroformate followed by polymerization. Chain termination agents such as phenol may also be employed.

The preferred siloxane copolymers employed in the instant invention contain the formula

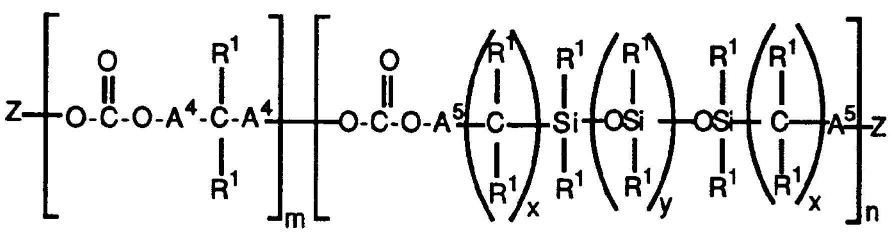

IV

wherein each $A^4$ is independently a substituted or unsubstituted divalent aromatic radical and each $R^1$ is independently a $C_1$-$C_6$ hydrocarbon radical or a substituted or unsubstituted aromatic radical. It is often preferred that $R^1$ is a methyl group. Each $A^5$ is independently a substituted or unsubstituted divalent aromatic radical; however, often each $A^5$ is a para aromatic radical with an alkoxy group in the meta position, wherein the preferred alkoxy group is a methoxy group. Further, m and n may each independently be an integer from 1 to 200 such that the siloxane copolymer has a weight average molecular weight of at least about 2,000 but preferably at least about 5,000. Additionally, x may be any integer from 2 to 5 and y may be any integer from 5 to 100, and each Z is a polycarbonate end group.

The polycarbonate blends disclosed herein comprise at least one of the phosphorus containing compounds represented by the formulae

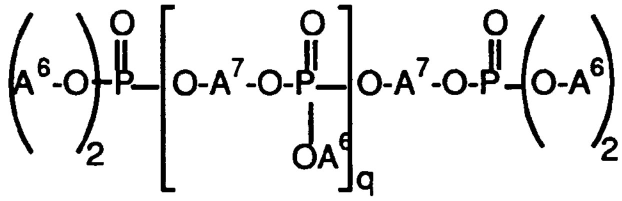 V

and

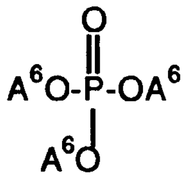 , VI

wherein each $A^6$ is independently a substituted or unsubstituted monovalent aliphatic, alicyclic or aromatic radical and q is any integer from 0 to 10. Each $A^7$ is a divalent substituted or unsubstituted aliphatic, alicyclic or aromatic radical. Illustrative examples of said phosphorus containing compounds include triaryl phosphates such as triphenylphosphate and tetraaryl resorcinol diphosphates such as tetraphenyl resorcinol diphosphate.

A phosphorus containing compound as depicted above may be prepared, for instance, by reacting a monohydroxyaromatic compound with phosphorus oxychloride in the presence of a Lewis acid catalyst (such as $AlCl_3$) to produce a chlorophosphoric acid diester. Said diester is then reacted with an aromatic bisphenol, again in the presence of a Lewis acid catalyst, to produce a diphosphate compound as described by formula V.

Siloxane copolymers (silicone-polycarbonate block copolymers) employed in the instant invention may be prepared by a method which intercondenses a hydroxyl-terminated polycarbonate oligomer with a halo-terminated polydiorganosiloxane in the presence of acid acceptors such as methylene chloride and triethylamine. Such methods for preparing siloxane copolymers are described in U.S. Patents 4,920,183 and 3,189,662 in which the disclosure of both is incorporated herein by reference.

The preferred siloxane copolymers employed in the instant invention may be prepared by a method which phosgenates a mixture of dihydroxy compounds and organopolysiloxanes, wherein said organopolysiloxanes are often made by hydrosilylation of an alkenyl phenol with a silicon hydride terminated polydiorganosiloxane. Such a method is described in commonly assigned U.S. Patent 3,419,634 the disclosure of which is incorporated herein by reference.

The following examples and table are provided to further illustrate and facilitate the understanding of the invention. All products obtained may be confirmed by conventional techniques such as proton and carbon 13 nuclear magnetic resonance spectroscopy as well as gel permeation chromatography. Moreover, the entries in the table below have been prepared in the manner described in Examples 1 and 2. The data confirms the unexpected results obtained in the instant invention.

**Example 1**

Into a mixing vessel was placed 2000g of a bisphenol A polycarbonate having a weight average molecular weight of 50,000 and 51.3g of tetraaryl resorcinol diphosphate (2.5 weight percent of total weight of blend) as purchased from AKZO. The resulting mixture was stirred to produce a polycarbonate-phosphate blend in the form of a powder. The powder was extruded at 280°C on a 3.18 cm single screw extruder to produce pellets. The pellets were then dried and injection molded at 300°C yielding a polymer blend. The polymer blend displayed a Tg of 139°C with (1/8") notched Izod impact of 2.4 ft lbs/in. UL-94 at 60, 90 and 120 mils failed due to flaming drips. Rate of heat release (RHR) was 191 kw/$m^2$ and smoke release rate (SRR) was 673 smoke/min, $m^2$.

**Example 2**

Into a mixing vessel was placed 1500g of a bisphenol A polycarbonate having a weight average molecular weight of 50,000, 500g of bis-eugenol siloxane bisphenol A copolycarbonate (20 weight percent siloxane copolymer with a siloxane chain length of 50 units) to produce a 5 weight percent siloxane based on total weight

of the polycarbonate blend and 51.3g of tetraaryl resorcinol diphosphate (2.5 weight percent of total weight of blend) as purchased from AKZO. The resulting mixture was stirred to produce a polycarbonate-phosphate copolysiloxane blend in the form of a powder. The powder was extruded at 280°C on a 3.18 cm single screw extruder to produce pellets. The pellets were then dried and injection molded at 300°C to produce a polymer blend having a Tg of 137°C and notched Izod impact (1/8") of 17.8 ft lb/in. UL-94 at 60, 90 and 120 mils were all V-O. RHR was 113 and SRR was 355.

**Example 3**

Example 3 was prepared in a manner similar to Example 2 except that 0.04 weight percent based on total weight of the polycarbonate blend (0.8g) of polytetrafluoroethylene was employed as a drip inhibitor. UL-94 at 60 mils was V-O.

| Entry | Weight % siloxane | Weight % phosphorus compound | Tg°C | 1/8" Notched Izod ft lb/in | 60 mil | 90 mil | 120 mil | RHR | SRR |
|---|---|---|---|---|---|---|---|---|---|
| 1 | 0 | 0 | 150 | 16.4 | fail | fail | fail | 188 | 448 |
| 2 | 0 | 5.0 | 129 | 1.3 | fail | fail | V-1 | 157 | 592 |
| 3 | 0 | 10.0 | 109 | 0.9 | fail | fail | V-0 | 130 | 540 |
| 4 | 5 | 0 | 151 | 16.6 | fail | fail | V-0 | 93 | 220 |
| 5 | 5 | 5.0 | 130 | 18.5 | V-0 | V-0 | V-0 | 102 | 258 |
| 6 | 5 | 10.0 | 108 | 2.1 | V-0 | V-0 | V-0 | 116 | 383 |

## Claims

1. A polycarbonate blend comprising:
   (a) as an additive about 0.5 to about 9.5 weight percent of a phosphorus containing compound based on total weight of the polycarbonate blend, wherein the polycarbonate blend has no greater than about 0.5 weight percent phosphorus based on total weight of said polycarbonate blend;
   (b) siloxane copolymers wherein said siloxane copolymers comprise of at least about 0.5 weight percent silicon based on total weight of said polycarbonate blend; and
   (c) a polycarbonate.

2. A polycarbonate blend in accordance with claim 1 wherein said polycarbonate blend comprises as an additive about 2.0 to about 5.0 weight percent of said phosphorus containing compound.

3. A polycarbonate blend in accordance with claim 1 wherein said siloxane copolymers comprise of at least about 2 weight percent silicon based on total weight of the polycarbonate blend.

4. A polycarbonate blend in accordance with claim 1 wherein said polycarbonate blend comprises of at least one structural unit of the formula

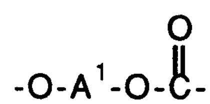

   wherein $A^1$ is a divalent aliphatic, alicyclic or aromatic radical.

5. A polycarbonate blend in accordance with claim 4 wherein $A^1$ is represented by the formula

$$A^2\text{-}Y\text{-}A^3,$$

   wherein $A^2$ and $A^3$ are each independently a monocyclic divalent aromatic radical and Y is a bridging radical.

6. A polycarbonate blend in accordance with claim 1 wherein all of said polycarbonate in said polycarbonate blend originates from the siloxane copolymer.

7. A polycarbonate blend in accordance with claim 6 wherein said polycarbonate blend comprises of about 5 to about 99.5 weight percent of said siloxane copolymers.

8. A polycarbonate blend in accordance with claim 1 wherein said siloxane copolymer has the formula

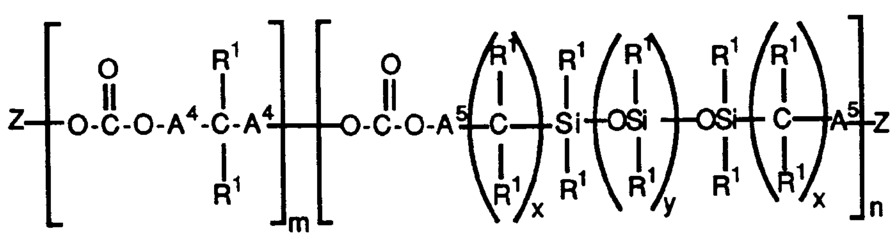

   wherein each $A^4$ is independently a substituted or unsubstituted divalent aromatic radical and each $A^5$ is independently a substituted or unsubstituted divalent aromatic radical and each $R^1$ is independently a $C_1$-$C_6$ hydrocarbon radical or a substituted or unsubstituted aromatic radical wherein m and n may each independently be an integer from 1 to 200 and x may be any integer from 2 to 5 and y may be any integer from 5 to 100 and each Z is a polycarbonate end group.

9. A polycarbonate blend in accordance with claim 8 wherein $A^5$ is a para aromatic radical with an alkoxy group in the meta position.

**10.** A polycarbonate blend in accordance with claim 9 wherein said alkoxy group is a methoxy group.

**11.** A polycarbonate blend in accordance with claim 1 wherein said polycarbonate blend comprises at least one phosphorus compound of the formulae

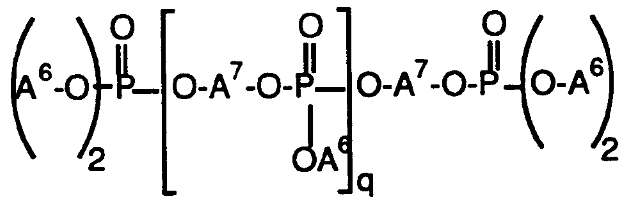

and

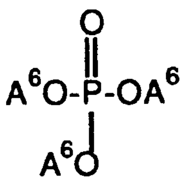

wherein each $A^6$ is independently a substituted or unsubstituted monovalent aromatic radical and q is any integer from 0 to 10 and each $A^7$ is independently a divalent aliphatic, alicyclic or aromatic radical.

**12.** A polycarbonate blend in accordance with claim 11 wherein said polycarbonate blend has a glass transition temperature of at least about 125°C.

**13.** A polycarbonate blend in accordance with claim 12 wherein said polycarbonate blend has an impact resistance of at least about 10 ft lb/in of notch.

**14.** A polycarbonate blend in accordance with claim 13 wherein said polycarbonate blend comprises a drip inhibitor.

**15.** A polycarbonate blend in accordance with claim 14 wherein said drip inhibitor is polytetrafluoroethylene.

**16.** A polycarbonate blend in accordance with claim 13 wherein said polycarbonate blend does not comprise a drip inhibitor.

**17.** A polycarbonate blend in accordance with claim 11 wherein said phosphorus compound is a triarylphosphate.

**18.** A polycarbonate blend in accordance with claim 17 wherein said phosphorus compound is triphenylphosphate.

**19.** A polycarbonate blend in accordance with claim 11 wherein said phosphorus compound is a tetraaryl resorcinol diphosphate.

**20.** A polycarbonate blend in accordance with claim 19 wherein said tetraaryl resorcinol diphosphate is a tetraphenyl resorcinol diphosphate.

**21.** A polycarbonate blend in accordance with claim 5 wherein said structural unit is a 2,2-bis(4-phenylene)propane carbonate unit.

**22.** A polycarbonate blend in accordance with claim 8 wherein said siloxane copolymer has a weight average molecular weight of at least about 2,000.

**23.** A polycarbonate blend in accordance with claim 22 wherein said siloxane copolymer has a weight average molecular weight of at least about 5,000.

European Patent Office

# EUROPEAN SEARCH REPORT

Application Number
EP 94 30 5789

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE-A-40 16 417 (BAYER AG) | 1-5,7, 11, 16-18, 21-23 | C08K5/523<br>C08L83/10<br>C08L69/00 |
| A | * page 5, line 3 - line 4; claims 1-3; examples *<br>* page 6, line 46 - line 50 *<br>--- | 8-10, 12-15 | |
| X | DE-A-36 28 904 (BAYER AG) | 1-7,11, 14,15, 17,18, 21-23 | |
| A | * page 4, line 34 - line 35; claims 1-3 *<br>----- | 8-10,12, 13 | |

TECHNICAL FIELDS SEARCHED (Int.Cl.6)

C08K
C08L

The present search report has been drawn up for all claims

| Place of search | Date of completion of the search | Examiner |
|---|---|---|
| BERLIN | 25 November 1994 | Angiolini, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)